(19) Europäisches Patentamt / European Patent Office / Office européen des brevets

(11) **EP 3 177 090 A1**

(12) **EUROPEAN PATENT APPLICATION**
published in accordance with Art. 153(4) EPC

(43) Date of publication:
**07.06.2017 Bulletin 2017/23**

(51) Int Cl.:
**H04W 72/04** *(2009.01)*      **H04W 28/04** *(2009.01)*

(21) Application number: **15826656.9**

(22) Date of filing: **01.07.2015**

(86) International application number:
**PCT/JP2015/068992**

(87) International publication number:
**WO 2016/017356 (04.02.2016 Gazette 2016/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **31.07.2014   JP 2014156893**

(71) Applicant: **NTT DOCOMO, INC.**
**Chiyoda-ku**
**Tokyo 100-6150 (JP)**

(72) Inventors:
• **TAKEDA, Kazuki**
  **Tokyo 100-6150 (JP)**
• **HARADA, Hiroki**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **USER TERMINAL, WIRELESS BASE STATION, AND WIRELESS COMMUNICATION METHOD**

(57)   The present invention is designed to control UL communication and DL communication flexibly and improve the throughput and the quality of communication in radio communication. The present invention provides a transmission section that transmits uplink data by using an uplink shared channel, a receiving section that receives downlink control information and downlink data that are transmitted from a radio base station, and a control section that controls the transmission of a delivery acknowledgement signal in response to the downlink data that is received, and the receiving section receives downlink data (DL-PUSCH) that is transmitted using the uplink shared channel, and the control section controls a delivery acknowledgement signal in response to the DL-PUSCH to be transmitted at a predetermined timing.

FIG.4

EP 3 177 090 A1

**Description**

Technical Field

The present invention relates to a user terminal, a radio base station and a radio communication method that are applicable to next-generation communication systems.

Background Art

In the UMTS (Universal Mobile Telecommunications System) network, the specifications of long term evolution (LTE) have been drafted for the purpose of further increasing high speed data rates, providing lower delays and so on (see non-patent literature 1). In LTE, as multiple-access schemes, a scheme that is based on OFDMA (Orthogonal Frequency Division Multiple Access) is used in downlink channels (downlink), and a scheme that is based on SC-FDMA (Single Carrier Frequency Division Multiple Access) is used in uplink channels (uplink). Also, successor systems of LTE (referred to as, for example, "LTE-advanced" or "LTE enhancement" (hereinafter referred to as "LTE-A")) have been developed for the purpose of achieving further broadbandization and increased speed beyond LTE, and the specifications thereof have been drafted (Re. 10/11).

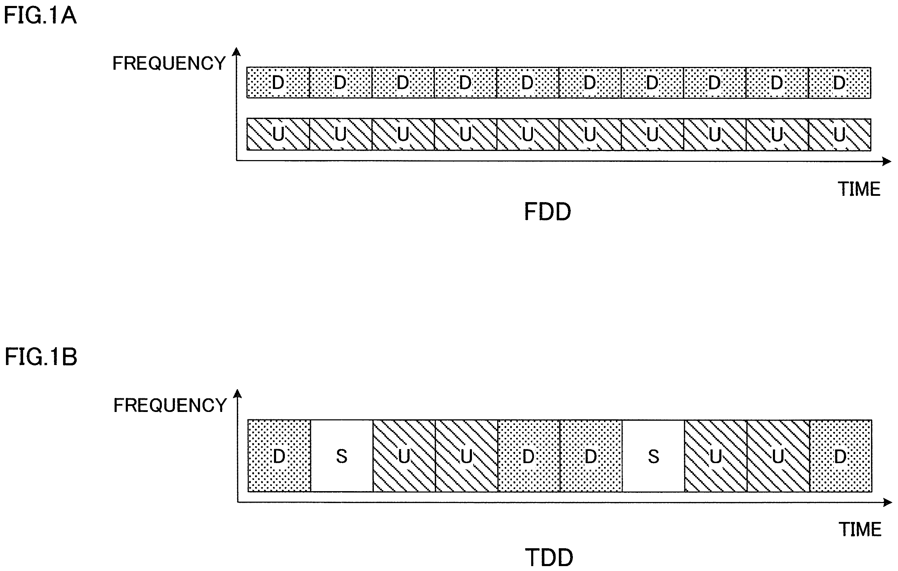

As duplex modes for radio communication in LTE and LTE-A systems, there are frequency division duplex (FDD) to divide between the uplink (UL) and the downlink (DL) based on frequency, and time division duplex (TDD) to divide between the uplink and the downlink based on time (see FIGs. 1 A and 1 B). In the event of TDD, the same frequency region is used in both uplink and downlink communication, and signals are transmitted and received to and from one transmitting/receiving point by dividing between the uplink and the downlink based on time.

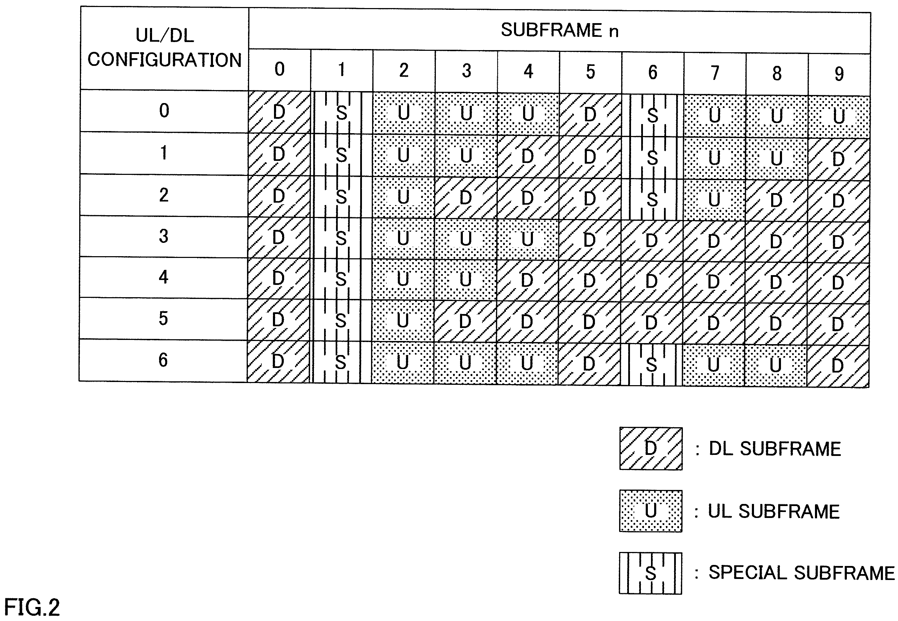

In TDD in LTE systems, a plurality of frame configurations (UL/DL configurations) are stipulated with varying transmission ratios between uplink subframes (UL subframes) and downlink subframes (DL subframes). To be more specific, as shown in FIG. 2, seven frame configurations namely, UL/DL configurations 0 to 6 -- are stipulated, where subframes #0 and #5 are allocated to the downlink, and subframe #2 is allocated to the uplink.

Also, the system band of LTE-A systems (Rel. 10/11) includes at least one component carrier (CC), where the system band of LTE systems constitutes one unit. Gathering a plurality of component carriers (cells) to make a wide band is referred to as "carrier aggregation" (CA).

Citation List

Non-Patent Literature

Non-Patent Literature 1: 3GPP TS 36. 300 "Evolved UTRA and Evolved UTRAN Overall Description"

Summary of Invention

Technical Problem

Generally speaking, in radio communication systems, the volume of DL traffic and the volume of UL traffic are different, and the volume of DL traffic is likely to increase in comparison to the volume of UL traffic. Also, the ratio of DL traffic and UL traffic is not constant, and varies over time or between locations.

However, in existing LTE/LTE-A systems, the effective use (flexibility) of radio resources has limits. For example, in FDD, UL frequency resources cannot be used for DL communication. In TDD, likewise, UL time resources cannot be used for DL communication dynamically.

Consequently, there is a demand for a method of improving the throughput and the quality of communication in radio communication by flexibly controlling UL communication and DL communication by taking into consideration the volume of traffic and so on.

The present invention has been made in view of the above, and it is therefore an object of the present invention to provide a radio base station, a user terminal and a radio communication method which can control UL communication and DL communication flexibly, and improve the throughput and the quality of communication in radio communication.

Solution to Problem

One aspect of the present invention provides a user terminal having a transmission section that transmits uplink data by using an uplink shared channel, a receiving section that receives downlink control information and downlink data that are transmitted from a radio base station, and a control section that controls the transmission of a delivery acknowledgement signal in response to the downlink data that is received, and, in this user terminal, the receiving section receives downlink data (DL-PUSCH) that is transmitted using the uplink shared channel, and the control section controls a delivery acknowledgement signal in response to the DL-PUSCH to be transmitted at a predetermined timing.

Advantageous Effects of Invention

According to the present invention, it is possible to control UL communication and DL communication flexibly and improve the throughput and the quality of communication in radio communication.

Brief Description of Drawings

FIGs. 1 provide diagrams to explain duplex modes in LTE/LTE-A;
FIG. 2 is a diagram to show UL/DL configurations for use in TDD cells of existing systems;
FIGs. 3 provide diagrams to show examples of DL-PUSCH transmission/reception;
FIG. 4 is a diagram to show an example of a method of transmitting delivery acknowledgement signals in response to DL-PUSCHs;
FIGs. 5 provide diagrams to show an example of a table that stipulates HARQ timings according to TDD UL/DL configurations, and examples of HARQ timings;
FIGs. 6 provide diagrams to show examples of tables that stipulate HARQ timings according to base UL/DL configurations and reference UL/DL configurations, and examples of HARQ timings;
FIGs. 7 provide diagrams to show examples of HARQ timings based on a table that stipulates HARQ timings according to base UL/DL configurations and reference UL/DL configurations;
FIG. 8 is a diagram to show an example of a DL-PUSCH subframe configuration;
FIG. 9 is a diagram to show examples of HARQ timings in response to DL-PUSCHs;
FIGs. 10 provide diagrams to show an example of table that stipulates HARQ timings according to reference UL/DL configurations and examples of HARQ timings;
FIG. 11 is a diagram to show examples of HARQ timings in response to DL-PUSCHs that are transmitted in an FDD cell's UL frequency;
FIG. 12 is a diagram to show an example of a method of determining PUCCH resources for allocating delivery acknowledgement signals in response to DL-PUSCHs;
FIGs. 13 provide diagrams to show another example of a method of determining PUCCH resources for allocating delivery acknowledgement signals in response to DL-PUSCHs;
FIG. 14 is a diagram to explain another example of method of determining PUCCH resources for allocating delivery acknowledgement signals in response to DL-PUSCHs;
FIG. 15 is a diagram to explain another example of a method of determining PUCCH resources for allocating delivery acknowledgement signals in response to DL-PUSCHs;
FIG. 16 is a schematic diagram to show an example of a radio communication system according to the present embodiment;
FIG. 17 is a diagram to explain an overall structure of a radio base station according to the present embodiment;
FIG. 18 is a diagram to explain a functional structure of a radio base station according to the present embodiment;
FIG. 19 is a diagram to explain an overall structure of a user terminal according to the present embodiment; and
FIG. 20 is a diagram to explain a functional structure of a user terminal according to the present embodiment.

Description of Embodiments

As described above, in existing LTE systems, UL frequency resources cannot be used for DL communication in FDD, and UL time resources cannot be used for DL communication dynamically in TDD, making effective use of radio resources difficult.

To solve this problem, a study is in progress to use UL time resources in TDD as DL time resources (eIMTA) by changing the UL/DL configuration in TDD semi-statically, on a per cell basis. For example, a radio base station can secure DL communication resources by selecting a UL/DL configuration having a high DL subframe ratio (for example, UL/DL configurations 4, 5 and others in above FIG. 2) depending on the subject cell's communication environment.

However, when cells that use TDD employ varying UL/DL configurations, an interference control technique is required to reduce inter-UL-DL interference with TDD cells that neighbor geographically or in frequency. Consequently, besides eIMTA, a method to make it possible to control UL communication and DL communication flexibly and improve the throughput of DL communication is in demand.

The present inventors have focused on the fact that D2D (Device to Device) communication provides support for the kind of communication that uses a PUSCH format between user terminals (D2D discovery/communication). That is, user terminals that support D2D communication have a function for receiving signals (SC-FDMA signals) that are transmitted by using UL resources in the same format (PUSCH format) as the PUSCH.

In D2D communication that is currently under study, a user terminal performs D2D discovery to find out other user terminals with which the user terminal can communicate. In D2D discovery, the network semi-statically allocates a periodic uplink resource (PUSCH) to every user terminal as a D2D discovery resource. A user terminal allocates the discovery signal to the D2D discovery resource and transmits the signal. Also, the user terminal can find out other communicable user terminals by receiving the discovery signals transmitted from other user terminals.

In this way, in D2D communication, a study is in progress to allow communication between user terminals by using PUSCH resources. Also, the present inventors have focused on the fact that, when application of carrier aggregation (CA) is supported, predetermined UL resources are not always necessary between radio base stations and user terminals.

So, the present inventors have come up with the idea of allowing radio base stations to perform DL communication in a PUSCH format by using UL resources (for example, the PUSCH). That is, a radio base station allocates downlink data to an uplink shared channel (PUSCH) that is configured in a TDD cell's UL subframes and/or to the PUSCH that is configured in the UL frequency in FDD. A user terminal performs receiving processes for the downlink data allocated to the PUSCH. Note that a downlink signal (for example, downlink data) which the radio base station transmits by using the PUSCH is also referred to as a "DL-PUSCH" (or a "DL-PUSCH signal").

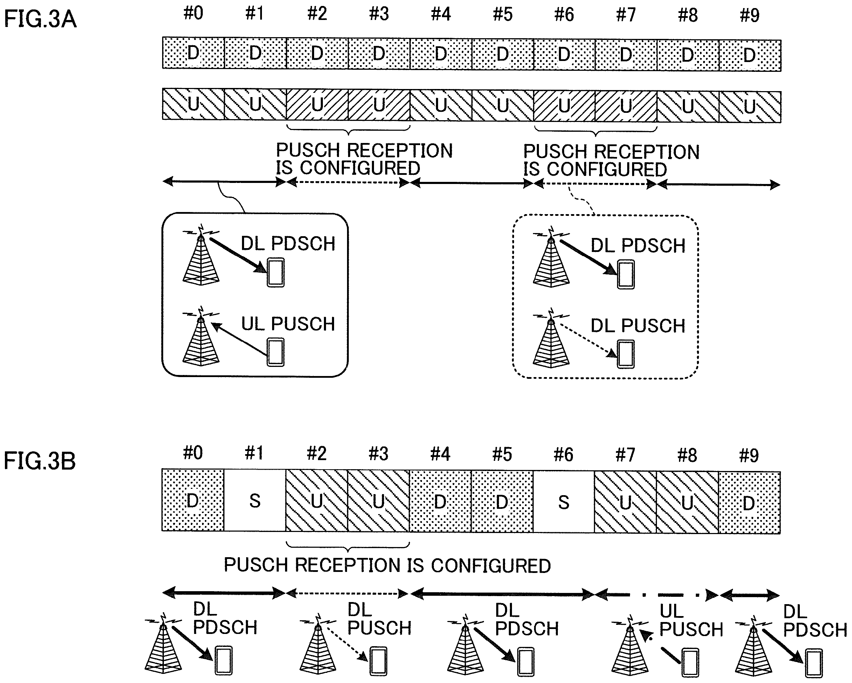

FIGs. 3 show examples of cases where DL communication is carried out using UL resources. FIG. 3A shows a case in which DL communication is carried out using part of the UL resources (subframes #2, #3, #6 and #7) in FDD. That is, in part of these UL resources, DL signals (DL-PUSCHs) are transmitted from the radio base station to the user terminal by using the PUSCH. Note that, in the other subframes, the user terminal transmits UL signals by using the PUSCH in the same way as heretofore.

FIG. 3B shows a case in which DL communication is carried out using part of the UL resources (here, UL subframes #2 and #3) in TDD. That is, in part of these UL subframes in TDD, DL signals (DL-PUSCHs) are transmitted from the radio base station to the user terminal by using the PUSCH. Note that, in the other subframes (here, UL subframes #7 and #8), the user terminal transmits UL signals by using the PUSCH as in existing LTE/LTE-A systems. Note that, although FIG. 3B shows TDD UL/DL configuration 1, the present embodiment is by no means limited to this.

Also, the user terminal can be structured to be capable of reporting, in advance, that the user terminal has a capability for receiving DL-PUSCHs (PUSCH receiving capability), to the network. This enables the radio base station to transmit DL-PUSCHs to predetermined user terminals selectively. When this PUSCH receiving capability is defined as a user terminal's capability, the radio base station can judge that this user terminal can receive DL-PUSCHs in arbitrary frequency bands upon receiving a report to the effect that the user terminal has this PUSCH receiving capability. On the other hand, this PUSCH receiving capability may be defined as a user terminal's capability in specific frequency bands. In this case, the user terminal reports to the radio base station whether the user terminal has the PUSCH receiving capability, in each frequency band in which the user terminal can communicate. The radio base station can apply configurations so that this user terminal receives DL-PUSCHs in frequency bands where the user terminal has the PUSCH receiving capability.

Also, the radio base station configures the user terminal to receive the PUSCH in UL resources. For example, the radio base station reports information for configuring (enabling/disabling) DL-PUSCH reception in the user terminal, by using higher layer signaling (RRC signaling, broadcast signals and so on), and, furthermore, reports information that is necessary for receiving DL-PUSCHs (for example, information about DL-PUSCH transmission timings, the DCI format to use for scheduling, and so on). Furthermore, the radio base station can dynamically transmit information about DL-PUSCH reception commands.

The user terminal checks whether or not there is a DL-PUSCH reception command, and controls the operations depending on whether or not there are commands from the radio base station. Also, the user terminal, after having performed receiving processes (demodulation and so on) of DL-PUSCHs received from the radio base station in UL resources (the UL frequency in FDD, UL subframes in TDD, etc.), can pass the resulting downlink data from the physical layer to a higher layer.

In this way, by transmitting DL signals from the radio base station to the user terminal by using UL resources (PUSCH), it is possible to use UL resources flexibly for DL communication depending on the volume of UL and DL traffic. Also, even when TDD is employed, it is still possible to use radio resources flexibly without changing the mechanism of UL/DL configurations.

Also, the present embodiment makes it possible to use UL resources dynamically for DL communication, in 1-ms units, which are equivalent to the transmission time interval (for example, the subframe). Furthermore, the UL frequencies in FDD and TDD, when used in combination with CA, can be used for DL communication in a flexible and dynamic fashion.

Also, a radio base station that is transmitting DL-PUSCHs can be seen as being equal to a user terminal that is engaged in UL transmission of the PUSCH by using UL resources and/or a user terminal that is engaged in D2D communication in a cell that neighbors physically or in frequency. Reference signals (UL DM-RS) that are included in the PUSCH can randomize (or whiten) interference by using different reference signal sequences and/or scrambling codes between cells that neighbor physically or in frequency. Consequently, by using the PUSCH in DL communication where UL resources are used, even when collisions occur with PUSCHs transmitted by other user terminal in cells that are nearby physically or in frequency, it is still possible to achieve an interference randomization (or whitening) effect, and reduce the interference-induced deterioration to a minimum.

Now, in order to realize high-quality packet communication in radio communication systems, it is necessary to apply retransmission control (Hybrid ARQ). In DL communication in existing systems (LTE/LTE-A), a user terminal transmits a delivery acknowledgement signal (HARQ-ACK) in response to a downlink shared channel (PDSCH) by using an uplink control channel (PUCCH) and/or an uplink shared channel (PUSCH). To be more specific, it is stipulated that the user terminal modulates an HARQ-ACK in a predetermined method and feeds this back, in a predetermined subframe after a PDSCH is received.

However, since the user terminal has never heretofore been assumed to receive DL-PUSCHs that are transmitted from radio base stations, there is no mechanism to feed back downlink HARQ-ACKs in response to DL-PUSCHs. Consequently, introduction of DL-PUSCH transmission/reception is accompanied by the problem of how to apply Hybrid ARQ to the DL-PUSCH.

The present inventors have focused on the fact that (1) L1/L2 control signals such as downlink control channels (the PDCCH and/or the EPDCCH), and/or (2) higher layer signaling such as RRC signaling can be used to schedule DL-PUSCHs (resource allocation). That is, a radio base station might transmit a DL-PUSCH reception command (also referred to as, for example, a "DL-PUSCH grant") to a user terminal by using a downlink control channel and/or higher layer signaling.

So, the present inventors have come up with the idea of controlling a user terminal having received a DL-PUSCH to transmit a delivery acknowledgement signal (HARQ-ACK) in a predetermined timing. For example, the user terminal may send feedback a predetermined period of time (x ms) after receiving a DL-PUSCH, or send feedback a predetermined period of time (x ms) after receiving a downlink control channel (DL-PUSCH grant) that indicates a DL-PUSCH. In this way, by transmitting/receiving DL-PUSCHs and also by applying retransmission control (Hybrid ARQ) to DL-PUSCHs, it is possible to control UL communication and DL communication flexibly, and improve the throughput and the quality of communication in radio communication.

Now, the present embodiment will be described below in detail. Note that, with the present embodiment, carrier aggregation (CA) or dual connectivity (DC) can be employed between a cell that performs DL-PUSCH transmission/reception and a cell that does not. For example, CA may be employed by seeing a cell that does not perform DL-PUSCH transmission/reception as a primary cell (PCell), and a cell that performs DL-PUSCH transmission/reception as a secondary cell (SCell).

CA refers to the bundling of a plurality of component carriers (also referred to as "CCs," "carriers," "cells," etc.) into a wide band. Each CC has, for example, a maximum 20 MHz bandwidth, so that, when maximum five CCs are bundled, a wide band of maximum 100 MHz is provided. When CA is employed, one radio base station's scheduler controls the scheduling of a plurality of CCs. Based on this, CA may be referred to as "intra-base station CA" (intra-eNB CA) as well.

Dual connectivity (DC) is the same as CA in bundling a plurality of CCs into a wide band. When DC is employed, a plurality of schedulers are provided individually, and these multiple schedulers each control the scheduling of one or more cells (CCs) managed thereunder. Based on this, DC may be referred to as "inter-base station CA" (inter-eNB CA). Note that, in dual connectivity, carrier aggregation (intra-eNB CA) may be employed per individual scheduler (that is, radio base station) that is provided.

(First Example)

A case will be described with a first example where a user terminal performs hybrid ARQ transmission in a predetermined timing after receiving a DL-PUSCH transmitted from a radio base station. The predetermined timing may be determined based on (1) a value that is stipulated according to the reference UL/DL configuration (DL reference UL-DL configuration), (2) a predetermined value (for example, 4 ms), or (3) an HARQ-ACK timing that is stipulated in TDD-FDD CA (where TDD applies to the PCell). Each timing (1) to (3) will be described below. Note that, although (1) and (2) below will presume DL-PUSCH transmission/reception in TDD and (3) in FDD, these are by no means limiting.

(1) Hybrid ARQ based on reference UL/DL configuration

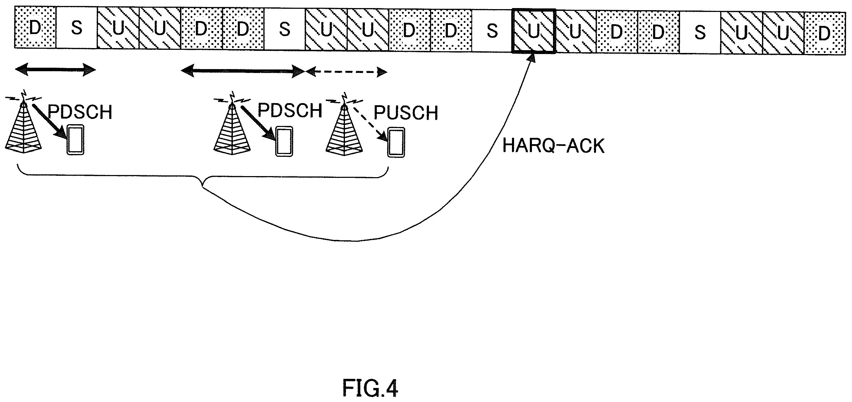

A user terminal that receives a DL-PUSCH can transmit an HARQ-ACK in response to the received DL-PUSCH in a timing that is stipulated according to the reference UL/DL configuration (DL reference UL-DL configuration) (see FIG. 4). The reference UL/DL configuration refers to the UL/DL configuration that is used to provide HARQ timings. For example, the user terminal can control the HARQ-ACK transmission timing in response to a DL-PUSCH by using a table in which HARQ timings are stipulated according to UL/DL configurations (base UL/DL configurations) that are configured for data transmission, and reference UL/DL configurations.

For example, the user terminal can use the HARQ timings stipulated in eIMTA as a reference UL/DL configuration. In eIMTA, in addition to the TDD UL/DL configuration (base UL/DL configuration) that is configured in the user terminal, a UL/DL configuration to be used to provide HARQ timings (reference UL/DL configuration) is configured. However, unlike eIMTA in which the assumption is that the user terminal receives DL data in the PDSCH, according to the present embodiment, DL data is received in the PUSCH.

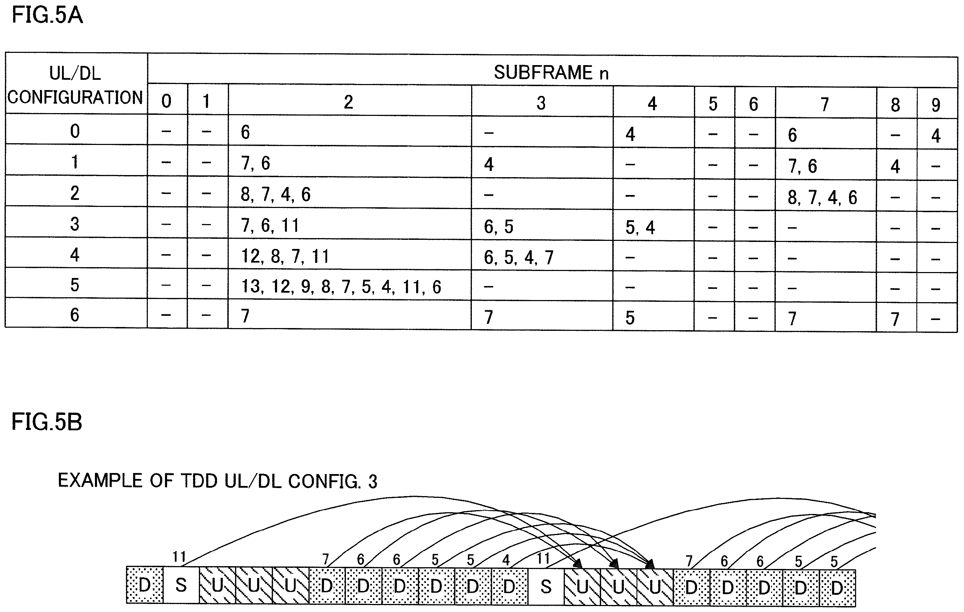

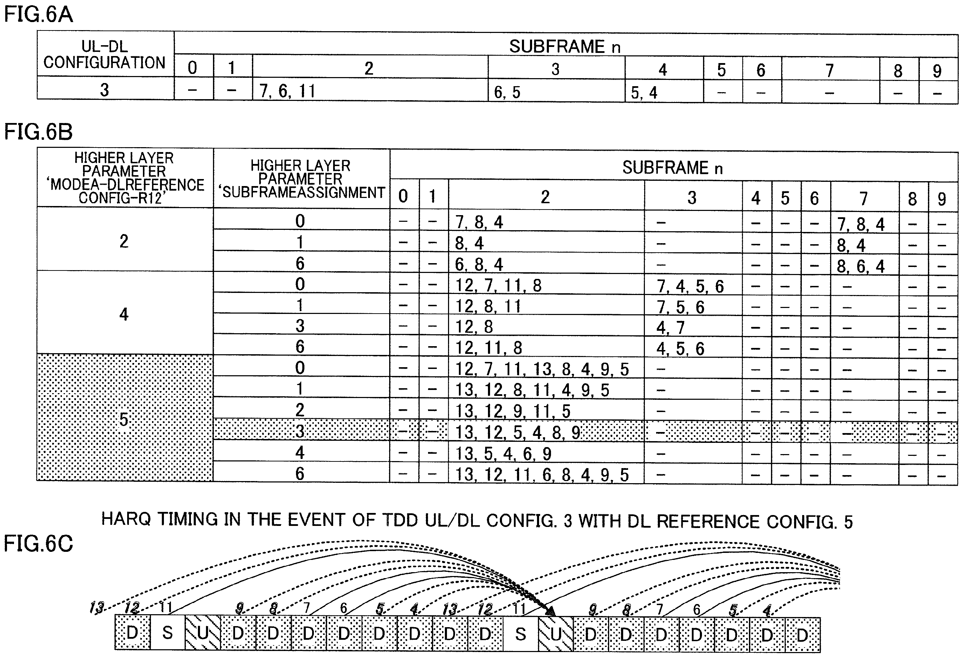

Here, FIGs. 5 show HARQ timings in existing TDD, and FIGs. 6 show HARQ timings applicable to the present embodiment.

FIG. 5A is a table that shows HARQ timings in TDD in an existing system (LTE). As shown in the table of FIG. 5A, the DL subframes to feed back HARQ-ACKs to are associated with UL subframes in every UL/DL configuration. For example, when a UL/DL configurations 3 is employed, the user terminal transmits, in subframe #2 (UL subframe), HARQ-ACKs in response to the PDSCHs transmitted in the DL subframes that are 6, 7 and 11 subframes back from the instant subframe (see FIG. 5B).

FIG. 6A is a table in which the HARQ timings in UL/DL configurations 3 in FIG. 5A are sampled. FIG. 6B is a table which shows the HARQ timings for when reference UL/DL configurations are used. For example, a base UL/DL configuration for use by the user terminal and reference UL/DL configurations (2, 4 and 5) that correspond to the base UL/DL configuration are stipulated.

Here, a case in which UL/DL configuration 3 is employed and furthermore a reference UL/DL configurations 5 is employed will be assumed. In this case, in UL subframe #2, the user terminal selects the subframes that are 6, 7 and 11 subframes back from this UL subframe #2 as the subframes to feed back HARQ-ACKs to, as in existing systems (see FIG. 6A). Furthermore, in UL subframe #2, the user terminal selects the subframes that are 13, 12, 5, 4, 8 and 9 subframes back from this UL subframe #2 (see FIG. 6B).

That is, by using subframe #2, the user terminal transmits HARQ-ACKs in response to the subframes that are 4, 5, 6, 7, 8, 9, 11, 12 and 13 subframes back from this subframe by taking into consideration the base UL/DL configuration and the reference UL/DL configuration (see FIG. 6C). Note that FIG. 6C shows the HARQ timings that are based on the reference UL/DL configuration. Information about the base UL/DL configuration and/or the reference UL/DL configuration is reported from the radio base station to the user terminal.

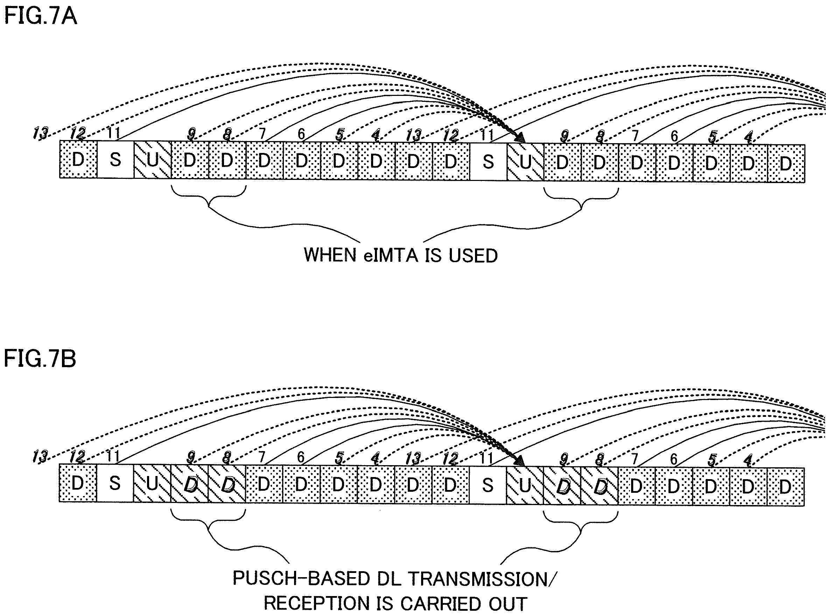

In this way, the user terminal controls the HARQ timings for downlink data that is received (the PDSCH, the DL-PUSCH, etc.) based on a base UL/DL configuration and a reference UL/DL configuration that are reported from the radio base station. Also, as described above, although the HARQ timings stipulated in eIMTA reference UL/DL configurations (table) can be used, the present embodiment, in which DL data is received in the PUSCH (see FIG. 7B), is different from eIMTA, in which DL data is received in the PDSCH (see FIG. 7A).

Now, examples of HARQ-ACK operations for when using reference UL/DL configurations will be described below.

First, the radio base station reports the UL/DL configuration (base UL/DL configuration) to use in the TDD cell to the user terminal. Above FIG. 7B shows a case where base UL/DL configuration 3 is reported. For this report to the user terminal, higher layer signaling such as broadcast signals or RRC signaling can be used.

Also, the radio base station reports/configures DL-PUSCH reception and a reference UL/DL configuration in the user terminal. Above FIG. 7B shows a case in which reference UL/DL configuration 5 is reported. For this report/configuration for the user terminal, higher layer signaling such as broadcast signals or RRC signaling, MAC control elements, physical control signals and so on can be used.

The radio base station commands the user terminal, where the DL-PUSCH is configured, to receive DL-PUSCHs in predetermined subframes. Above FIG. 7B shows a case where subframes #3 and #4 are indicated as DL-PUSCH-receiving subframes. For this report/configuration for the user terminal, higher layer signaling such as broadcast signals or RRC signaling, MAC control elements, physical control signals and so on can be used.

The user terminal performs DL-PUSCH receiving operations in specified predetermined subframes, and transmits the results (HARQ-ACKs) in predetermined timings.

When receiving an ACK from the user terminal, the radio base station transmits the next data on the assumption that the DL-PUSCH which the radio base station had transmitted has been successfully received in the user terminal. Meanwhile, when a NACK is received from the user terminal, the radio base station retransmits the downlink data on the assumption that the DL-PUSCH has resulted in a reception error in the user terminal.

In this way, by controlling the HARQ timings in response to DL-PUSCHs by using a reference UL/DL configuration in addition to a base UL/DL configuration, it becomes possible to execute HARQ control adequately even when the DL-PUSCH is used.

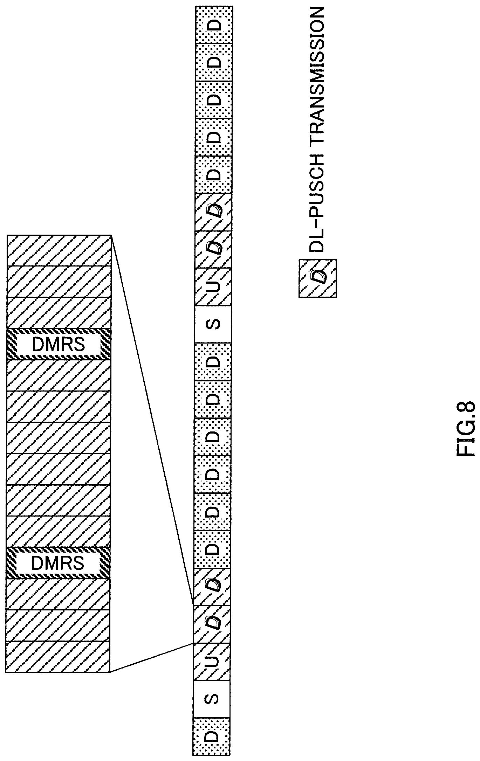

Also, according to the present embodiment, DL communication (DL-PUSCH) is carried out by using the PUSCH (PUSCH format), and therefore the same signal configuration is used as in UL communication (UL-PUSCH) by user terminals in other cells. For example, as shown in FIG. 8, like UL transmission that uses the PUSCH, DL transmission to use the PUSCH can be configured with data (DL-PUSCH) and the reference signal (DM-RS) for demodulating this data. Consequently, it is possible to randomize the interference that is caused against UL transmissions (by, for example, applying inter-DM-RS randomization) in neighboring cells where DL-PUSCHs are not used.

Also, DL communication (DL-PUSCH) to use the PUSCH can be configured not to transmit the cell-specific reference signals (CRSs), channel state measurement reference signals (CSI-RSs) and so on of existing systems. Consequently, it is possible to control the communication band to use for DL-PUSCHs (by, for example, not allocating DL-PUSCHS to both ends of the communication system), and reduce the interference that is caused against UL communication in neighboring frequencies.

Also, in order to demodulate DL-PUSCHs on a per subframe basis with DM-RSs, without transmitting CRSs, CSI-RSs and so on, the radio base station can transmit DL-PUSCHs by making the transmission power lower than DL subframes (for example, by using the user terminal's maximum transmission power). By this means, it is possible to reduce the interference that is caused against UL communication in neighboring cells and/or neighboring frequencies. In particular, since the PUSCH is a single-carrier-based signal which has a low PAPR and which is highly efficient in terms of the use of power, the radio base station can save its power consumption.

(2) Hybrid ARQ based on predetermined value

When receiving a DL-PUSCH, the user terminal can transmit an HARQ-ACK in response to the received DL-PUSCH after a predetermined period of time passes. For example, the user terminal transmits the HARQ-ACK 4 ms after receiving the DL-PUSCH.

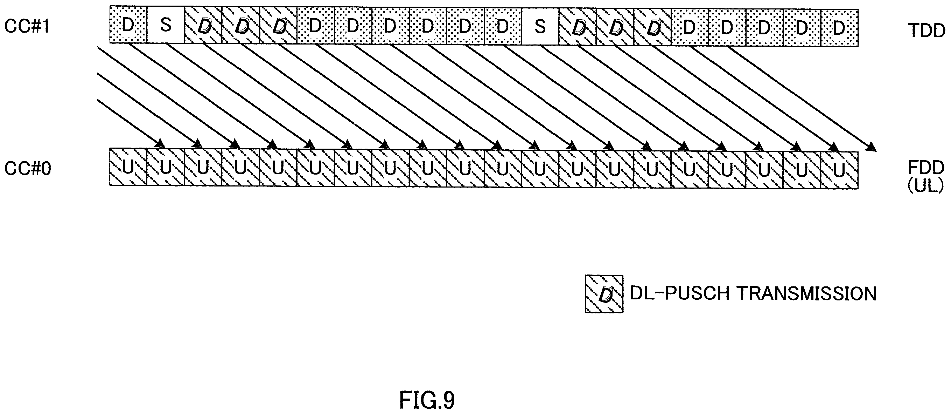

In this case, the user terminal may preferably be configured to communicate with a carrier where UL transmission is maintained on a continuous basis -- for example, the user terminal execute carrier aggregation (CA) or dual connectivity (DC) with an FDD cell that has a UL frequency (see FIG. 9). FIG. 9 shows a case where CA is applied between CC #1 that adopts TDD and CC #0 that adopts FDD. Note that this FDD cell can be made a PCell or a PSCell where the PUCCH can be allocated (transmitted).

FIG. 9 shows a case where the user terminal feeds back an HARQ-ACK in response to a DL-PUSCH by using the FDD UL subframe that comes 4 ms after the subframe in which this DL-PUSCH is received.

Note that the user terminal controls the reception of DL-PUSCHs, the transmission of HARQ-ACKs and so on based on information that is reported from the radio base station (configuration of the DL-PUSCH, DL-PUSCH reception command, etc.), as in the above-described case with (1) reference UL/DL configurations.

In this way, by transmitting HARQ-ACKs in response to DL-PUSCHs by using an FDD cell's UL subframes, it becomes possible to apply all the subframes to DL communication in a TDD cell that performs DL-PUSCH communication (see FIG. 9).

(3) Hybrid ARQ in TDD-FDD CA

When the user terminal receives DL-PUSCHs in TDD-FDD CA, in which TDD applies to the PCell, the user terminal can control the HARQ timings based on HARQ timings (table) that are stipulated in FDD, which applies to the SCell.

In TDD-FDD CA in which FDD applies to the SCell, cases might occur where an HARQ-ACK in response to a PDSCH that is transmitted in FDD DL is transmitted in a UL subframe in TDD, which applies to the PCell. In this case, the user terminal controls the HARQ timing of this HARQ-ACK by using a reference UL/DL configuration. Consequently, when UL subframes are used for DL-PUSCHs, it is possible to control the feedback of HARQ-ACKs based on this reference UL/DL configuration.

For example, assume a case where the UL-PDSCH is transmitted in FDD not employing CA. Normally, in FDD, a UL frequency and a DL frequency are always allocated, so that the user terminal can transmit an HARQ-ACK in response to a PDSCH that is received in a DL subframe, by using a UL subframe that comes a predetermined period of time later (for example, 4 ms later).

However, when part of the UL subframes in FDD are used to transmit UL-PDSCHs, it becomes difficult to report HARQ-ACKs in response to the PDSCH of each DL subframe in UL subframes that come 4 ms later. Also, in what timings HARQ-ACKs in response to UL-PDSCHs should be fed back is the problem.

So, according to the present embodiment, in the UL frequency, HARQ timings that are based on the reference UL/DL configuration, which is selected by taking into consideration the DL-PUSCH-transmitting/receiving subframes, are used. Also, in the DL frequency, HARQ timings that are stipulated for the FDD-SCell in TDD-FDD CA with a TDD-PCell are used. For example, in the DL frequency, a UL/DL configuration that corresponds to the reference UL/DL configuration configured in the UL frequency can be used.

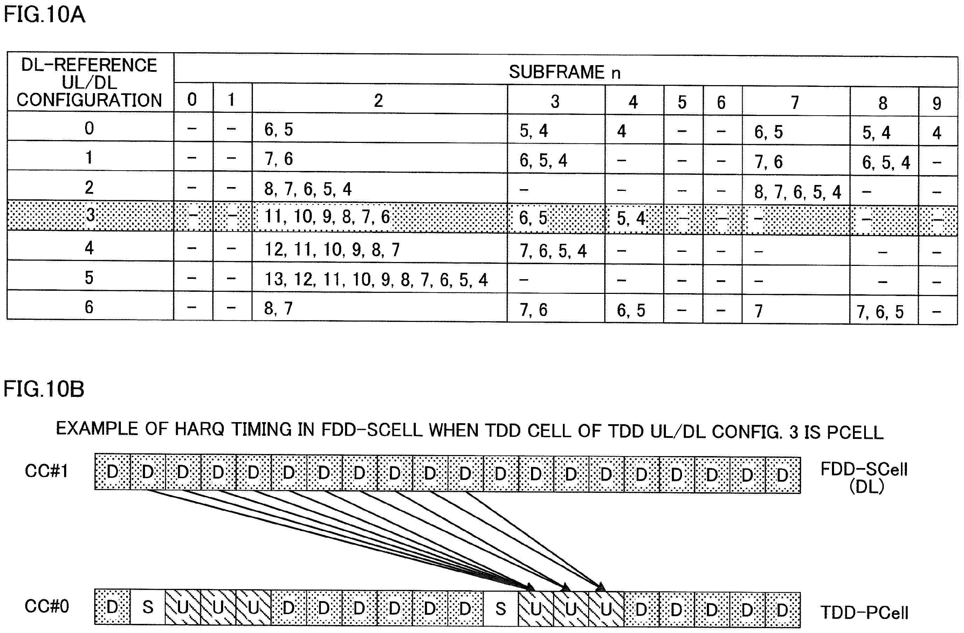

FIG. 10A shows a table that stipulates the HARQ timings in FDD, which applies to the SCell, in TDD-FDD CA (in which TDD applies to the PCell). In FIG. 10B, the TDD cell to employ TDD UL/DL configurations 3 is the PCell, and the HARQ timings in FDD (SCell), which is engaged in CA with this TDD cell, are shown. As shown in FIG. 10B, HARQ-ACKs in response to each DL subframe of the FDD cell are transmitted in predetermined UL subframes in TDD.

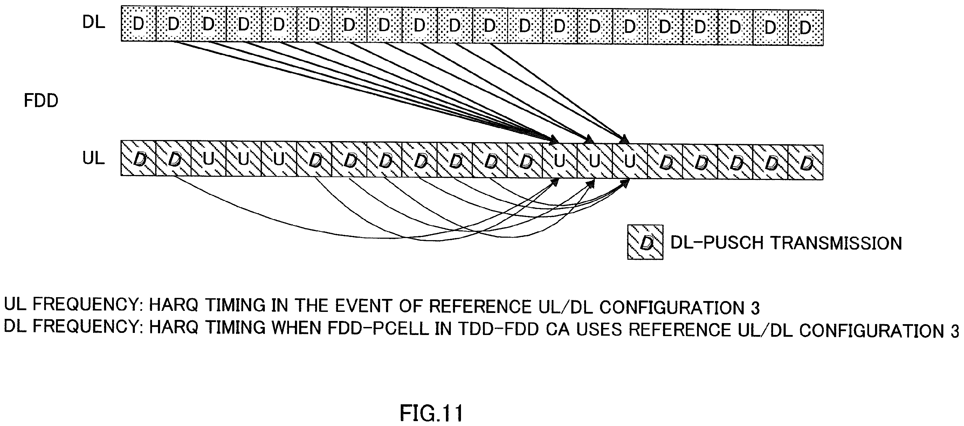

FIG. 11 shows examples of HARQ timings for when part of the UL subframes in FDD are used to transmit the UL-PDSCH. Referring to FIG. 11, in the FDD UL frequency, the HARQ timings according to reference UL/DL configurations 3 are used, and, in the DL frequency, the HARQ timings for when the PCell, which uses TDD in TDD-FDD CA, employs UL/DL configurations 3, are used. Note that the reference UL/DL configuration to apply to the UL frequency can be made a UL/DL configuration that is applicable when the assumption holds that DL-PUSCHs are transmitted in DL subframes.

Note that information about part or all of the HARQ timings which the user terminal might use may be reported from the radio base station to the user terminal, or may be determined by the user terminal based on the subframes in which DL-PUSCHs are received. The information about part or all of the HARQ timings may include information about the UL/DL configuration to apply to the FDD UL frequency, the reference UL/DL configuration to apply to the FDD DL frequency, and so on. Also, the user terminal may stipulate the HARQ timings for the DL frequency in accordance with the UL/DL configuration that is configured in the FDD UL frequency.

In this way, by transmitting and receiving DL-PUSCHs by using the UL frequency in FDD, it is possible to increase the DL resources of FDD paired bands.

(Second Example)

A case will be described with a second example where a user terminal controls HARQ timings based on downlink control information (DL-PUSCH grant) that commands reception of DL-PUSCHs.

For example, the user terminal feeds back an HARQ-ACK in response to a DL-PUSCH at a timing a predetermined period of time (x ms) after downlink control information (PDCCH/EPDCCH) to indicate this DL-PUSCH is received.

Note that, according to the case illustrated in (2) of the first example, the user terminal judges whether or not a DL-PUSCH to be received in a predetermined UL subframe based on a command from the radio base station has been successfully received, and feeds back an HARQ-ACK in a subframe that comes a predetermined period of time (for example, 4 ms) after that.

By contrast with this, according to the second example, when the user terminal detects downlink control information (PDCCH/EPDCCH) received in a predetermined DL subframe, the user terminal judges whether or not the DL-PUSCH has been received successfully, at a predetermined timing following the detection, and feeds back an HARQ-ACK in a subframe that comes a predetermined period of time (for example, 4 ms) after the downlink control information is detected.

In current LTE, the control signal to command DL reception and the DL data signal are multiplexed in the same subframe. However, when DL-PUSCHs are received, the control signal and the data signal may not be necessarily multiplexed in the same subframe, and there is a high likelihood that the timings the data signal is transmitted and received lag behind (that is, come a predetermined number of subframes after) the timings the control signal is transmitted and received. In this way, by controlling the HARQ timing in response to a DL-PUSCH based on downlink control information (DL-PUSCH grant) that indicates this DL-PUSCH, it is possible to start preparing for HARQ transmission in the step in which the control signal is detected, so that it is possible to reduce the round trip delay of HARQ and improve the communication speed the user experiences.

(Third Example)

As shown above with the first example and the second example, the user terminal can control the feedback of a delivery acknowledgement signal (HARQ-ACK) in response to a DL-PUSCH in a predetermined timing. When doing so, the user terminal has to determine the UL resource (which is, for example, an HARQ resource where the HARQ-ACK is allocated) to use to transmit the HARQ-ACK in response to the DL-PUSCH. Now, with a third example, a method of allocating HARQ-ACKs in response to DL-PUSCHs to radio resources will be described.

For the method of allocating an HARQ-ACK in response to a DL-PUSCH to a radio resource, (1) a radio resource that is determined implicitly based on a downlink control channel that commands reception of the DL-PUSCH, (2) a radio resource that is explicitly indicated by a downlink control channel that commands reception of the DL-PUSCH, (3) a radio resource that is determined implicitly by the DL-PUSCH, or (4) a radio resource that is configured by higher layer signaling (RRC signaling and so on) may be used. Note that a PUCCH resource to be allocated to a UL resource can be used as the radio resource for allocating the DL-PUSCH.

(1) PUCCH resource that is implicitly determined by downlink control channel

The user terminal can select a PUCCH resource based on the resource index of a downlink control channel (the PDCCH and/or the EPDCCH) that commands DL-PUSCH reception. For example, the user terminal transmits an HARQ-ACK by using a PUCCH resource that is determined based on the CCE index/ECCE index constituting the PDCCH/EPDCCH that commands DL-PUSCH reception.

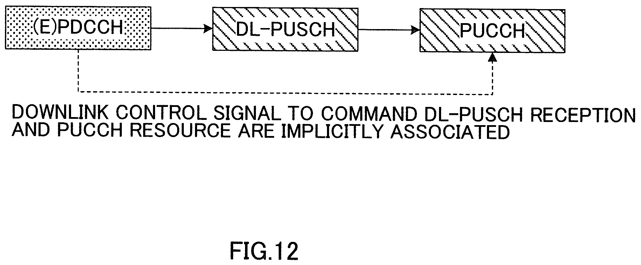

That is, a grant to command DL-PUSCH reception (for example, a UL grant) is implicitly associated with a PUCCH resource (see FIG. 12). For example, when the user terminal receives a PDCCH that commands DL-PUSCH reception, the PUCCH resource is determined by using the CCE index (nCCE) constituting that PUCCH. For example, the PUCCH resource can be determined using following equation 1:

[1]

$$n_{\mathrm{PUCCH}}^{(1,\tilde{p}_0)} = n_{\mathrm{CCE}} + N_{\mathrm{PUCCH}}^{(1)} \quad \dots \text{(Equation 1)}$$

Also, when the user terminal receives an EPDCCH to command DL-PUSCH reception, the user terminal determines the PUCCH resource by using the ECCE index (nECCE) constituting that EPUCCH. For example, the PUCCH resource can be determined by using following equation 2:

[2]

$$n_{\mathrm{PUCCH}}^{(1,\tilde{p}_0)} = n_{\mathrm{ECCE,q}} + \Delta_{ARO} + N_{\mathrm{PUCCH,q}}^{(\mathrm{e1})} \quad \dots \text{(Equation 2)}$$

If a plurality of CCE indices (or ECCE indices) constitute a PDCCH (or an EPDCCH), a predetermined CCE index (for example, the CCE index to have the smallest number) can be used. This method re-uses a method in existing LTE, in which a PUCCH resource is determined based on the index of a PDCCH/EPDCCH in which a DL assignment is included.

As implicit information to use to select PUCCH resources, PDCCH/EPDCCH antenna port indices, reference signal mapping locations, parameters that are equivalent to PDCCH/EPDCCH or reference signal scrambling cell IDs (virtual cell IDs) and so on may be included, besides resource indices.

In this way, by using a PUCCH allocation method that is based on PDSCH reception-commanding DL assignments when transmitting HARQ-ACKs in response to DL-PUSCHs, it is possible to simplify, and easily implement, the user terminal's circuit structure.

(2) PUCCH resource that is explicitly determined by downlink control channel

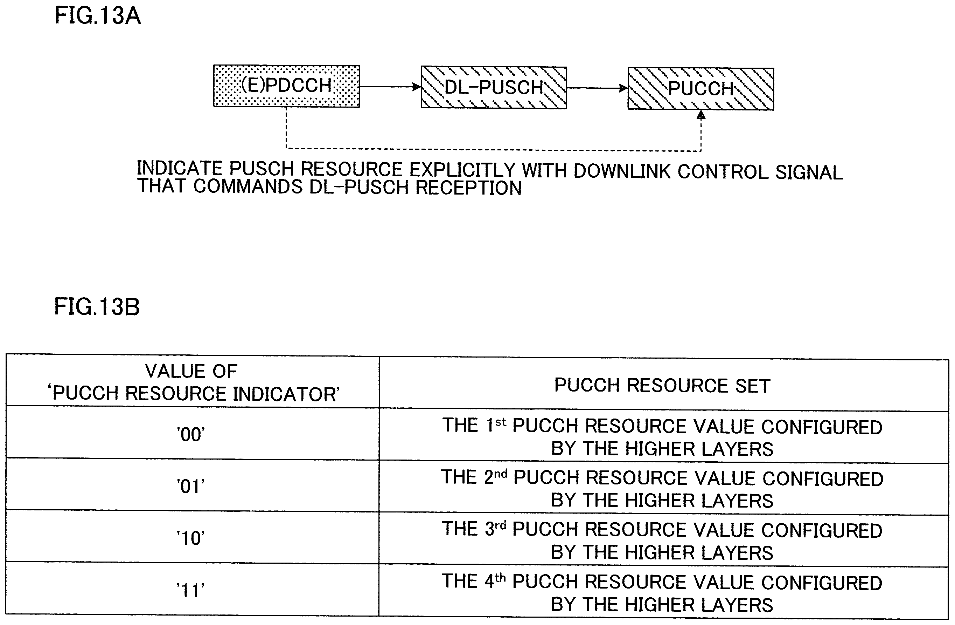

A bit field to specify a PUCCH resource may be introduced in the downlink control channel (PDCCH/EPDCCH). The user terminal can determine the PUCCH resource based on the information indicated in this bit field. That is, the PUCCH resource is explicitly indicated by a grant (for example, a UL grant) that commands DL-PUSCH reception (see FIG. 13A).

For example, it is possible to configure a plurality of PUCCH resources in advance, and indicate a predetermined PUCCH resource to the user terminal. To be more specific, the radio base station reports/configures a plurality of PUCCH resources (the first to fourth PUCCH resource values) in advance by using higher layer signaling such as RRC signaling (see FIG. 13B). After that, the radio base station dynamically commands the user terminal as to in which PUCCH resource an HARQ-ACK should be transmitted, by using a PUCCH resource indicator bit (PUCCH resource indicator) that is included in the downlink control channel (see FIG. 13B).

Note that the bit (bit field) to indicate a predetermined PUCCH resource may be newly added in downlink control information (DCI format), or it is equally possible to use an existing bit field as the PUCCH resource indicator bit.

(3) PUCCH resource that is implicitly determined by DL-PUSCH

Based on information about the resource of a DL-PUSCH that is received, the user terminal can select the PUCCH resource for transmitting an HARQ-ACK.

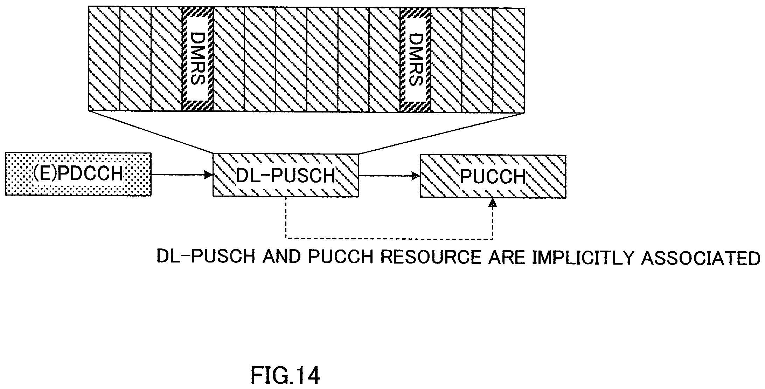

As information about the resource of the DL-PUSCH, the resource block (PRB) index where the DL-PUSCH is allocated and/or the DM-RS sequence index can be used. That is, the DL-PUSCH that is received is implicitly associated with a PUCCH resource (FIG. 14).

Also, considering that the PRBs of DL-PUSCHs overlap only between user terminals that are engaged in MU-MIMO (Multi User-MIMO), and that, in the event of MU-MIMO, the DM-RS sequence indices are different even if the PRB indices overlap, it is preferable to associate PRB indices and DM-RS sequence indices with PUCCH resources.

For example, the user terminal, when allocating an HARQ-ACK in response to a DL-PUSCH to the PUCCH resource of the m-th subframe, can control the allocation of the PUCCH resource by using following equation 3:

[3]

$$n_{PUCCH}(m) = X_{Parameter} + \left\lfloor I_{PRB\_RA} / L_{DMRS} \right\rfloor + l_{DMRS} + m \cdot N_{PUCCH} \quad \dots \text{(Equation 3)}$$

where:

Xparameter: parameter to apply offset;
IPRB_RA: PRB index;
LDMRS: parameter to represent the maximum number of MU-MIMO users;
1DMRS: DM-RS sequence index; and
NPUCCH: parameter to represent the number of PUCCH resources required in each subframe.

In this way, by determining the PUCCH resource based on information about the DL-PUSCH (for example, by using the resource index, the DM-RS sequence and so on), only one user terminal is allocated to a given PRB index, so that collisions of PUCCHs can be prevented. Also, even when two or more user terminals are allocated to the same PRB index, it is still possible to prevent collisions of PUCCHs by applying different DM-RS sequence indices on a per user terminal basis when MU-MIMO is used.

Also, between user terminals that all receive DL-PUSCHs in different subframes, it is possible to prevent collisions of PUCCHs by applying offsets on a per subframe basis according to the number of PUCCH resources (N_PUCCH).

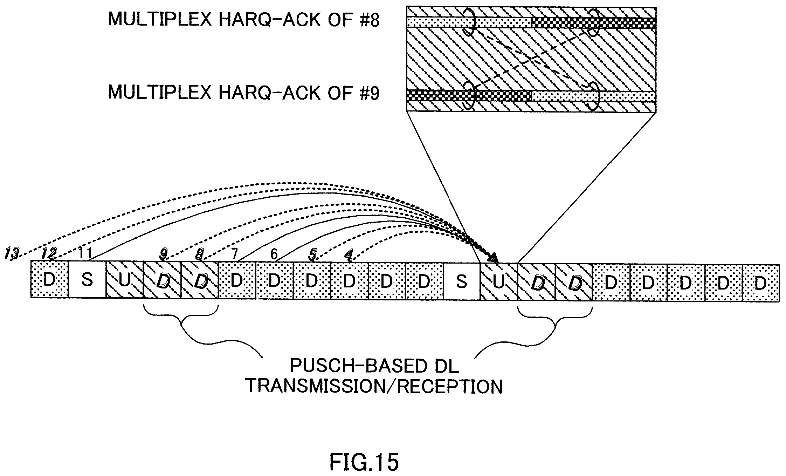

For example, as shown in FIG. 15, a case may be assumed in which HARQ-ACKs in response to the DL-PUSCHs transmitted in subframe #8 and subframe #9 are fed back in the same UL subframe. In this case, when the user terminal determines the PUCCH resource for the HARQ-ACK in response to subframe #8 and the PUCCH resource for the HARQ-ACK in response to subframe #9, it is possible to prevent the PUCCHs from colliding with each other by applying different offsets (including 0 offset). Note that the subframe indices shown in FIG. 15 are subframe indices that are assigned by way of going backward from the UL subframe in which HARQ-ACKs are fed back.

(Structure of Radio Communication System)

Now, the structure of the radio communication system according to one embodiment of the present invention will be described below. In this radio communication system, one of the above-described first example to the third example or a combination of these can be used.

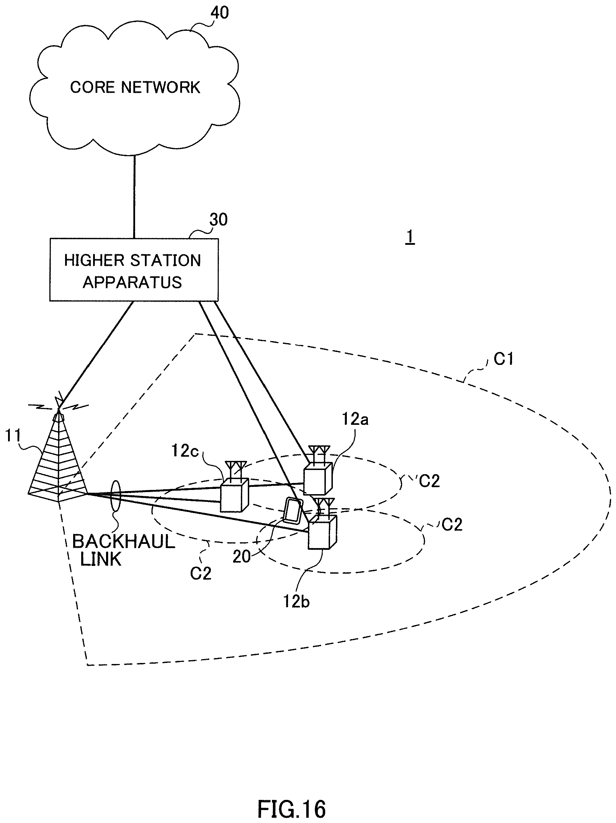

FIG. 16 is a schematic structure diagram to show an example of the radio communication system according to one embodiment of the present invention. As shown in FIG. 16, a radio communication system 1 is comprised of a plurality of radio base stations 10 (11 and 12), and a plurality of user terminals 20 that are present within cells formed by each radio base station 10 and that are configured to be capable of communicating with each radio base station 10. The radio base stations 10 are each connected with a higher station apparatus 30, and are connected to a core network 40 via the higher station apparatus 30.

In FIG. 16, the radio base station 11 is, for example, a macro base station that has a relatively wide coverage, and forms a macro cell C1. The radio base stations 12 are, for example, small base stations having local coverages, and form small cells C2. Note that the number of radio base stations 11 and 12 is not limited to that shown in FIG. 16.

The macro cell C1 and the small cells C2 may use the same frequency band or may use different frequency bands. Also, the radio base stations 11 and 12 are connected with each other via an inter-base station interface (for example, optical fiber, the X2 interface, etc.).

Note that the macro base station 11 may be referred to as a "radio base station," an "eNodeB" (eNB), a "transmission point" and so on. Also, the small base stations 12 may be referred to as "pico base stations," "femto base stations," "Home eNodeBs" (HeNBs), "transmission points," "RRHs" (Remote Radio Heads) and so on.

The user terminals 20 are terminals to support various communication schemes such as LTE, LTE-A and so on, and may include both mobile communication terminals and stationary communication terminals. The user terminals 20 can communicate with other user terminals 20 via the radio base stations 10.

Note that the higher station apparatus 30 may be, for example, an access gateway apparatus, a radio network controller (RNC), a mobility management entity (MME) and so on, but is by no means limited to these.

In the radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single-carrier transmission scheme to mitigate interference between terminals by dividing the system band into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, synchronization signals, MIBs (Master Information Blocks) and so on are communicated with the PBCH.

The L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH and PUSCH scheduling information is communicated by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH may be frequency-division-multiplexed with the PDSCH (downlink shared data channel) and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Also, according to the present embodiment, DL communication (DL-PUSCH transmission/reception) is carried out using the PUSCH configured in predetermined UL resources (UL subframes, the UL frequency band, etc.).

Also, downlink radio quality information (CQI: Channel Quality Indicator), delivery acknowledgment signals (HARQ-ACKs) and so on are communicated by the PUCCH. Delivery acknowledgement signals in response to the DL-PUSCH can also be transmitted using the PUCCH. By means of the PRACH, random access preambles (RA preambles) for establishing connections with cells are communicated. Also, a channel quality measurement reference signal (SRS: Sounding Reference Signal) and demodulation reference signals (DM-RSs) for demodulating the PUCCH and the PUSCH are transmitted as uplink reference signals.

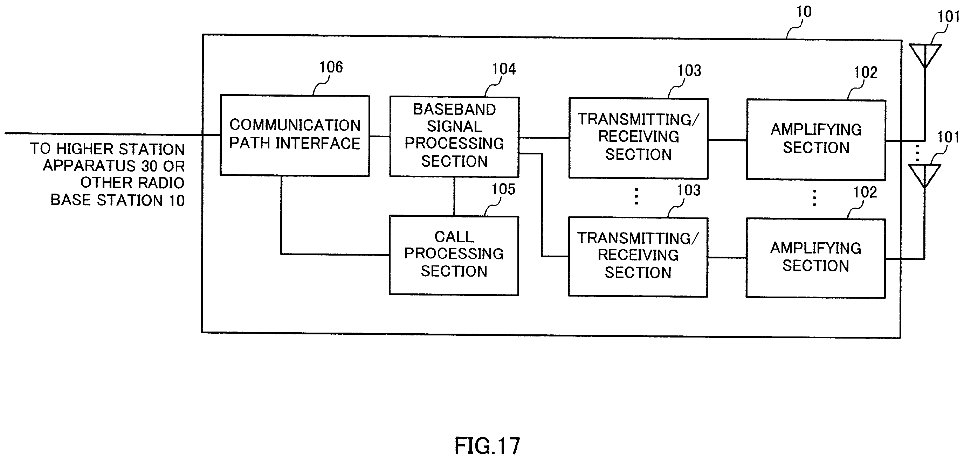

FIG. 17 is a diagram to show an overall structure of a radio base station 10 according to the present embodiment. The radio base station 10 (which may be either a radio base station 11 or 12) has a plurality of transmitting/receiving antennas 101 for MIMO communication, amplifying sections 102, transmitting/receiving sections 103, a baseband signal processing section 104, a call processing section 105 and a communication path interface 106. Note that the transmitting/receiving sections 103 are comprised of transmission sections and receiving sections.

User data to be transmitted from the radio base station 10 to a user terminal 20 on the downlink is input from the higher station apparatus 30 to the baseband signal processing section 104, via the communication path interface 106.

Given the user data, the baseband signal processing section 104 performs transmission processes such as a PDCP (Packet Data Convergence Protocol) layer process, division and coupling of user data, RLC (Radio Link Control) layer transmission processes such as an RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Each transmitting/receiving section 103 converts the downlink signals that are pre-coded and output from the baseband signal processing section 104 on a per antenna basis, into a radio frequency band. The radio frequency signals having been subjected to frequency conversion in the transmitting/receiving sections 103 are amplified in the amplifying sections 102, and transmitted from the transmitting/receiving antennas 101.

The transmitting/receiving sections 103 (transmission sections) can transmit information for configuring (enabling/disabling) reception of downlink data (DL-PUSCH) using the uplink shared channel (PUSCH), in the user terminal, through higher layer signaling (RRC signaling, broadcast signals and so on). Also, the transmitting/receiving sections 103 can report information about the subframes to transmit and receive the DL-PUSCH and so on, to the user terminal. Note that, for the transmitting/receiving sections 103, transmitters/receivers, transmitting/receiving circuits or transmitting/receiving devices that are used in the technical field to which the present invention pertains can be used.

Meanwhile, as with uplink signals, radio frequency signals that are received in each transmitting/receiving antenna 101 are amplified in each amplifying section 102. Each transmitting/receiving section 103 receives the uplink signals amplified in the amplifying sections 102. The received signals are converted into the baseband signal through frequency conversion in the transmitting/receiving sections 103 and output to the baseband signal processing section 104. The transmitting/receiving sections 103 receive the delivery acknowledgement signals in response to DL-PUSCHs, fed back from the user terminal, in predetermined timings.

In the baseband signal processing section 104, the user data that is included in the input uplink signals is subjected to a fast Fourier transform (FFT) process, an inverse discrete Fourier transform (IDFT) process, error correction decoding, a MAC retransmission control receiving process and RLC layer and PDCP layer receiving processes, and the result is forwarded to the higher station apparatus 30 via the communication path interface 106. The call processing section 105 performs call processing such as setting up and releasing communication channels, manages the state of the radio base station 10 and manages the radio resources.

The communication path interface 106 transmits and receives signals to and from the higher station apparatus 30 via a predetermined interface. Also, the communication path interface 106 transmits and receives signals to and from neighboring radio base stations 10 (backhaul signaling) via an inter-base station interface (for example, optical fiber, the X2 interface, etc.).

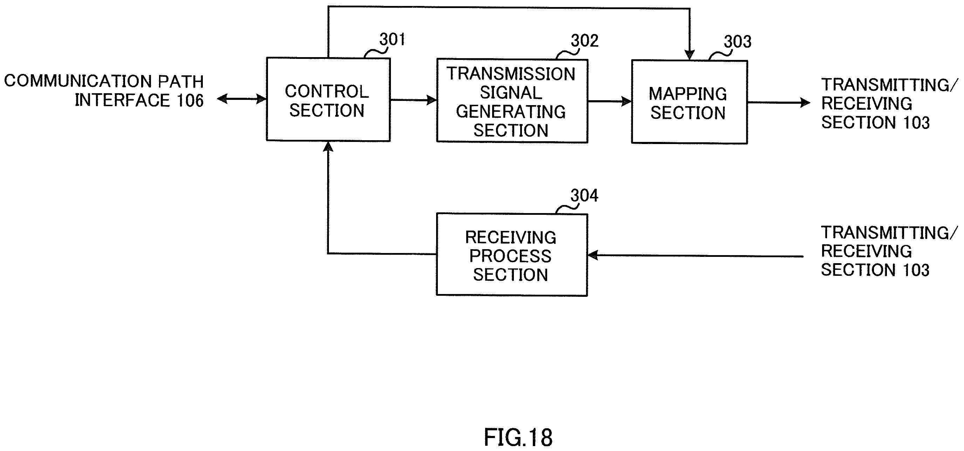

FIG. 18 is a diagram to show a principle functional structure of the baseband signal processing section 104 provided in the radio base station 10 according to the present embodiment. Note that, although FIG. 18 primarily shows functional blocks that pertain to characteristic parts of the present embodiment, the radio base station 10 has other functional blocks that are necessary for radio communication as well.

As shown in FIG. 18, the baseband signal processing section 104 provided in the radio base station 10 has a control section (scheduler) 301, a transmission signal generating section 302, a mapping section 303 and a receiving process section 304.

The control section (scheduler) 301 controls the scheduling (transmission from the radio base station 10) of downlink data that is transmitted in the PDSCH and downlink control signals that are communicated in the PDCCH and/or the enhanced PDCCH (EPDCCH). Also, the control section 301 controls the scheduling of downlink data that is transmitted in the PUSCH (DL-PUSCH).

Also, the control section 301 controls the scheduling of downlink reference signals such as system information, synchronization signals, the CRS, the CSI-RS and so on. Also, the control section 301 also controls the scheduling (transmission from the user terminal 20) of uplink reference signals, uplink data that is transmitted in the PUSCH, and uplink control signals that are transmitted in the PUCCH and/or the PUSCH. Note that the control section 301 can be constituted with a controller, a control circuit or a control device that is used in the technical field to which the present invention pertains.

Also, the control section 301 can command the user terminal to receive the DL-PUSCH by using a downlink control channel (the PDCCH and/or the EPDCCH). For example, the control section 301 transmits the DL-PUSCH in subframes in which uplink data transmission is not commanded with a UL grant. Also, the control section 301 applies control so that the DL-PUSCH is transmitted in the same subframes as subframes in which a DL-PUSCH grant is indicated, or in subframes which come a predetermined period of time later.

Also, the control section 301 may configure and use a grant (for example, a UL grant in existing systems) to command uplink data transmission using the PUSCH and a grant to command reception of the DL-PUSCH, those grants being as a single grant which is commonly configured and used. In this case, the user terminal 20 may judge the contents of UL grants based on other pieces of information (for example, information about the subframes in which the DL-PUSCH is transmitted).

Based on commands from the control section 301, the transmission signal generating section 302 generates DL signals (downlink control signals, downlink data, downlink reference signals and so on) and outputs these signals to the mapping section 303. For example, based on commands from the control section 301, the DL signal generating section 302 generates DL assignments, which report downlink signal allocation information, and UL grants, which report uplink signal allocation information. Furthermore, the downlink data is subjected to a coding process and a modulation process, based on coding rates and modulation schemes that are determined based on CSI from each user terminal 20 and so on.

Also, the transmission signal generating section 302 generates downlink data in a PUSCH format, in predetermined UL subframes. The downlink data (DL-PUSCH) that is generated in a PUSCH format is mapped to uplink resources (PUSCH) in the mapping section 303. Note that he transmission signal generating section 302 can be constituted with a signal generator or a signal generating circuit that is used in the technical field to which the present invention pertains.

The mapping section 303 maps the downlink signals generated in the transmission signal generating section 302 to radio resources based on commands from the control section 301. The mapping section 303 maps the downlink data to the PDSCH or the PUSCH based on commands from the control section 301. Note that the mapping section 303 can be constituted with a mapping circuit or a mapper that is used in the technical field to which the present invention pertains.

The receiving process section 304 performs receiving processes (for example, demapping, demodulation, decoding and so on) of UL signals (uplink control signals, uplink data, uplink reference signals and so on) transmitted from the user terminal 20. Also, the receiving process section 304 may measure the received power (RSRP), channel states and so on by using the received signals (for example, the SRS). Note that the processing results and the measurement results may be output to the control section 301. The receiving process section 304 can be constituted with a signal processor or a signal processing circuit that is used in the technical field to which the present invention pertains.

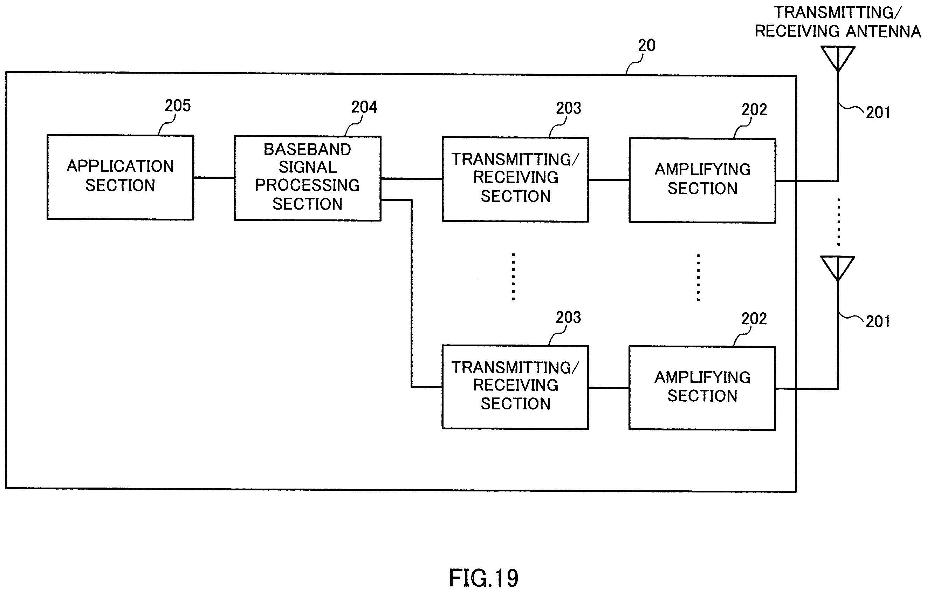

FIG. 19 is a diagram to show an overall structure of a user terminal 20 according to the present embodiment. As shown in FIG. 19, the user terminal 20 has a plurality of transmitting/receiving antennas 201 for MIMO communication, amplifying sections 202, transmitting/receiving sections 203, a baseband signal processing section 204 and an application section 205. Note that transmitting/receiving sections 203 may be comprised of transmission sections and receiving sections.

Radio frequency signals that are received in a plurality of transmitting/receiving antennas 201 are each amplified in the amplifying sections 202. Each transmitting/receiving section 203 receives the downlink signals amplified in the amplifying sections 202. The received signals are subjected to frequency conversion and converted into the baseband signal in the transmitting/receiving sections 203, and output to the baseband signal processing section 204.

The transmitting/receiving sections 203 (receiving sections) receive DL-PUSCHs based on information for configuring (enabling/disabling) DL-PUSCH reception. Also, the transmitting/receiving sections 203 (receiving sections) transmit delivery acknowledgement signals in response to the DL-PUSCHs. Note that the transmitting/receiving sections 203 can be constituted with transmitters/receivers, transmitting/receiving circuits or transmitting/receiving devices that are used in the technical field to which the present invention pertains.

In the baseband signal processing section 204, the baseband signals that are input are subjected to an FFT process, error correction decoding, a retransmission control receiving process and so on. Downlink user data is forwarded to the application section 205. The application section 205 performs processes related to higher layers above the physical layer and the MAC layer. Furthermore, in the downlink data, the broadcast information is also forwarded to the application section 205.

Meanwhile, uplink user data is input from the application section 205 to the baseband signal processing section 204. In the baseband signal processing section 204, a retransmission control transmission process (for example, an HARQ transmission process), channel coding, precoding, a discrete Fourier transform (DFT) process, an IFFT process and so on are performed, and the result is forwarded to each transmitting/receiving section 203. The baseband signal that is output from the baseband signal processing section 204 is converted into a radio frequency band in the transmitting/receiving sections 203. The radio frequency signals that are subjected to frequency conversion in the transmitting/receiving sections 203 are amplified in the amplifying sections 202, and transmitted from the transmitting/receiving antennas 201.

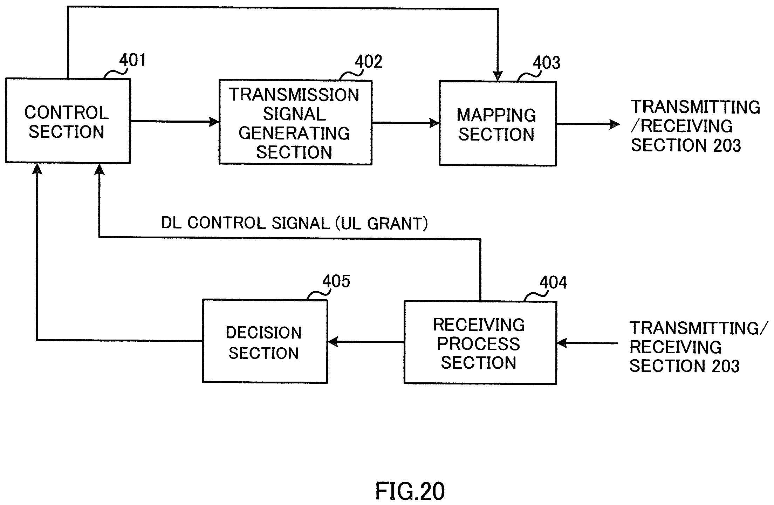

FIG. 20 is a diagram to show a principle functional structure of the baseband signal processing section 204 provided in the user terminal 20. Note that, although FIG. 20 primarily shows functional blocks that pertain to characteristic parts of the present embodiment, the user terminal 20 has other functional blocks that are necessary for radio communication as well.

As shown in FIG. 20, the user terminal 20 is comprised at least of a control section 401, a transmission signal generating section 402, a mapping section 403, a receiving process section 404 and a decision section 405.

The receiving process section 404 performs receiving processes (for example, demapping, demodulation, decoding and so on) of DL signals transmitted from the radio base station 10. Also, based on information about the subframes used for DL-PUSCH transmission/reception and so on, the receiving process section 404 can perform the receiving processes of DL-PUSCHs that are transmitted by using the PUSCH. Note that the receiving process section 404 can be constituted with a signal processor or a signal processing circuit that is used in the technical field to which the present invention pertains.

The receiving process section 404 decodes the downlink control signals transmitted in the downlink control channel (PDCCH/EPDCCH), and outputs the scheduling information to the control section 401. Also, the receiving process section 404 decodes the downlink data that is transmitted in the downlink shared channel (PDSCH) and the downlink data that is transmitted in the uplink shared channel (PUSCH), and outputs the results to the decision section 405. Also, the receiving process section 404 may measure the received power (RSRP) and the channel states by using the received signals. Note that the process results and the measurement results may be output to the control section 401.

The decision section 405 makes retransmission control decisions (ACKs/NACKs) based on the decoding results in the receiving process section 404, and, furthermore, outputs the results to the control section 401. Retransmission control decisions may be made with respect to the downlink data transmitted in the PDSCH and the downlink data (DL-PUSCH) transmitted in the PUSCH.

The control section 401 controls the generation of UL signals such as uplink control signals (feedback signals) and uplink data signals based on downlink control signals transmitted from the radio base station, and retransmission control decisions with respect to the PDSCH and/or the DL-PUSCH. To be more specific, the control section 401 controls the transmission signal generating section 402 and the mapping section 403. Note that the downlink control signals are output from the receiving section 404, and the retransmission control decisions are output from the decision section 405. The control section 401 can be constituted with a controller, a control circuit or a control device that is used in the technical field to which the present invention pertains.

When a retransmission control decision in response to a DL-PUSCH is output from the decision section 405, the control section 401 controls the delivery acknowledgement signal in response to the DL-PUSCH to be transmitted in a predetermined timing. For example, the control section 401 controls the transmission of the delivery acknowledgement signal in response to the DL-PUSCH based on the timing the DL-PUSCH is received or based on the timing a downlink control channel (DL-PUSCH grant) to command reception of the DL-PUSCH is received.

To be more specific, the control section 401 can control the transmission of delivery acknowledgement signals in response to DL-PUSCHs based on a table which stipulates the timings to transmit delivery acknowledgement signals according to base UL/DL configurations and reference UL/DL configurations (see FIG. 6B and FIG. 7B). Alternatively, the control section 401 can control the transmission of a delivery acknowledgement signal in response to a DL-PUSCHs a certain period of time after the timing the DL-PUSCH is received or the timing a DL-PUSCH grant is received.

Alternatively, when receiving a DL-PUSCH allocated to an FDD cell's UL resource, the control section 401 can control the transmission of a delivery acknowledgement signal in response to the DL-PUSCH based on a table which stipulates delivery acknowledgement signal transmission timings according to reference UL/DL configurations (see FIG. 10A and FIG. 11).

Also, the control section 401 can command the mapping section 403 to allocate a delivery acknowledgement signal in response to a DL-PUSCH to a predetermined uplink control channel resource based on a downlink control channel to command reception of this DL-PUSCH (for example, the CCE index and so on). Alternatively, the control section 401 can command the mapping section 403 to allocate a delivery acknowledgement signal in response to a DL-PUSCH to a predetermined uplink control channel resource based on information about the DL-PUSCH that is received (for example, the PRB index and so on).

The transmission signal generating section 402 generates UL signals based on commands from the control section 401 and outputs these signals to the mapping section 403. For example, the transmission signal generating section 402 generates uplink control signals such as delivery acknowledgement signals (HARQ-ACKs) and channel state information (CSI) based on commands from the control section 401.

Also, the transmission signal generating section 402 generates uplink data based on commands from the control section 401. Note that, when a UL grant is contained in a downlink control signal reported from the radio base station 10, the control section 401 commands the transmission signal generating section 402 to generate uplink data. Note that transmission signal generating section 402 can be constituted with a signal generator or a signal generating circuit that is used in the technical field to which the present invention pertains.

Based on commands from the control section 401, the mapping section 403 maps the uplink signals generated in the transmission signal generating section 402 to radio resources (for example, the PUCCH, the PUSCH and so on), and outputs these signals to the transmitting/receiving section 203. For example, the mapping section 403 maps a delivery acknowledgement signal in response to a DL-PUSCH to a predetermined PUCCH resource. Note that the mapping section 403 can be constituted with a mapping circuit or a mapper that is used in the technical field to which the present invention pertains.

Note that the block diagrams that have been used to describe the above embodiments show blocks in function units. These functional blocks (components) may be implemented in arbitrary combinations of hardware and software. Also, means for implementing each functional block is not particularly limited. That is, each functional block may be implemented with one physically-integrated device, or may be implemented by connecting two physically separate devices via radio or wire and using these multiple devices.

For example, part or all of the functions of radio base stations 10 and user terminals 20 may be implemented using hardware such as ASICs (Application-Specific Integrated Circuits), PLDs (Programmable Logic Devices), FPGAs (Field Programmable Gate Arrays), and so on. Also, the radio base stations 10 and the user terminals 20 may be implemented with a computer device that includes a processor (CPU), a communication interface for connecting with networks, a memory and a computer-readable storage medium that holds programs.

Here, the processor and the memory are connected with a bus for communicating information. Also, the computer-readable recording medium is a storage medium such as, for example, a flexible disk, an opto-magnetic disk, a ROM, an EPROM, a CD-ROM, a RAM, a hard disk and so on. Also, the programs may be transmitted from the network through, for example, electric communication channels. Also, the radio base stations 10 and the user terminals 20 may include input devices such as input keys and output devices such as displays.

The functional structures of radio base stations 10 and user terminals 20 may be implemented with the above-described hardware, may be implemented with software modules that are executed on the processor, or may be implemented with combinations of both. The processor controls the whole of the user terminals by allowing the operating system to work. Also, the processor reads programs, software modulates and data from the storage medium into the memory, and executes various types of processes. Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Now, although the present invention has been described in detail above, it should be obvious to a person skilled in the art that the present invention is by no means limited to the embodiments described herein. For example, the above-described embodiments may be used individually or in combinations. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2014-156893, filed on July 31, 2014, including the specification, drawings and abstract, is incorporated herein by reference in its entirety.

**Claims**

1. A user terminal comprising:

   a transmission section that transmits uplink data by using an uplink shared channel;
   a receiving section that receives downlink control information and downlink data that are transmitted from a radio base station; and
   a control section that controls transmission of a delivery acknowledgement signal in response to the downlink data that is received,
   wherein the receiving section receives downlink data (DL-PUSCH) that is transmitted using the uplink shared channel, and the control section controls a delivery acknowledgement signal in response to the DL-PUSCH to be transmitted at a predetermined timing.

2. The user terminal according to claim 1, wherein the control section controls the transmission of the delivery acknowledgement signal in response to the DL-PUSCH based on the timing the DL-PUSCH is received.

3. The user terminal according to claim 2, wherein the control section controls the transmission of the delivery acknowledgement signal in response to the DL-PUSCH based on a table in which delivery acknowledgement signal transmission timings are stipulated according to base UL/DL configurations and reference UL/DL configurations.

4. The user terminal according to claim 2, wherein the control section controls the transmission of the delivery acknowledgement signal in response to the DL-PUSCH after a certain period of time passes from the timing the DL-PUSCH is received.

5. The user terminal according to claim 2, wherein, when the receiving section receives a DL-PUSCH that is allocated to a UL resource of an FDD cell, the control section controls transmission of a delivery acknowledgement signal in response to the DL-PUSCH based on a table in which delivery acknowledgement signal transmission timings are stipulated according to reference UL/DL configurations.

6. The user terminal according to claim 1, wherein the control section controls the transmission of the delivery acknowledgement signal in response to the DL-PUSCH based on a timing a downlink control channel to command reception of the DL-PUSCH is received.

7. The user terminal according to claim 1, wherein the control section controls the delivery acknowledgement signal in response to the DL-PUSCH to be allocated to a predetermined uplink control channel resource based on a downlink control channel to command reception of the DL-PUSCH.

8. The user terminal according to claim 1, wherein the control section controls the delivery acknowledgement signal in response to the DL-PUSCH to be allocated to a predetermined uplink control channel resource based on information about the DL-PUSCH that is received.

9. A radio base station comprising:

   a receiving section that receives uplink data that is transmitted using an uplink shared channel and uplink control information that is transmitted using an uplink control channel; and

a transmission section that transmits downlink control information and downlink data to a user terminal, wherein the transmission section transmits the downlink data by using the uplink shared channel, and the receiving section receives a delivery acknowledgement signal in response to the downlink data transmitted using the uplink shared channel, in a predetermined timing.

10. A radio communication method comprising the steps of:

transmitting uplink data by using an uplink shared channel;

receiving downlink data (DL-PUSCH) that is transmitted from a radio base station by using the uplink shared channel; and

controlling transmission of a delivery acknowledgement signal in response to the DL-PUSCH that is received, wherein the delivery acknowledgement signal in response to the DL-PUSCH is controlled to be transmitted in a predetermined timing.

EP 3 177 090 A1

FIG.1A

FREQUENCY

| D | D | D | D | D | D | D | D | D | D |
|---|---|---|---|---|---|---|---|---|---|
| U | U | U | U | U | U | U | U | U | U |

TIME

FDD

FIG.1B

FREQUENCY

| D | S | U | U | D | D | S | U | U | D |

TIME

TDD

| UL/DL CONFIGURATION | SUBFRAME n | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

D : DL SUBFRAME

U : UL SUBFRAME

S : SPECIAL SUBFRAME

FIG.2

EP 3 177 090 A1

FIG.3A

| #0 | #1 | #2 | #3 | #4 | #5 | #6 | #7 | #8 | #9 |

PUSCH RECEPTION IS CONFIGURED

PUSCH RECEPTION IS CONFIGURED

DL PDSCH

UL PUSCH

DL PDSCH

DL PUSCH

FIG.3B

| #0 | #1 | #2 | #3 | #4 | #5 | #6 | #7 | #8 | #9 |
| D | S | U | U | D | D | S | U | U | D |

PUSCH RECEPTION IS CONFIGURED

DL PDSCH

DL PUSCH

DL PDSCH

UL PUSCH

DL PDSCH

EP 3 177 090 A1

FIG.4

EP 3 177 090 A1

# FIG.5A

| UL/DL CONFIGURATION | SUBFRAME n | | | | | | | | | |
|---|---|---|---|---|---|---|---|---|---|---|
| | 0 | 1 | 2 | 3 | 4 | 5 | 6 | 7 | 8 | 9 |
| 0 | – | – | 6 | – | 4 | – | – | 6 | – | 4 |
| 1 | – | – | 7, 6 | 4 | – | – | – | 7, 6 | 4 | – |
| 2 | – | – | 8, 7, 4, 6 | – | – | – | – | 8, 7, 4, 6 | – | – |
| 3 | – | – | 7, 6, 11 | 6, 5 | 5, 4 | – | – | – | – | – |
| 4 | – | – | 12, 8, 7, 11 | 6, 5, 4, 7 | – | – | – | – | – | – |
| 5 | – | – | 13, 12, 9, 8, 7, 5, 4, 11, 6 | – | – | – | – | – | – | – |
| 6 | – | – | 7 | 7 | 5 | – | – | 7 | 7 | – |

# FIG.5B

EXAMPLE OF TDD UL/DL CONFIG. 3

EP 3 177 090 A1

## FIG.6A

| UL–DL CONFIGURATION | SUBFRAME n | | | | | | | | | |
|---|---|---|---|---|---|---|---|---|---|---|
| | 0 | 1 | 2 | 3 | 4 | 5 | 6 | 7 | 8 | 9 |
| 3 | – | – | 7, 6, 11 | 6, 5 | 5, 4 | – | – | – | – | – |

## FIG.6B

| HIGHER LAYER PARAMETER 'MODEA–DLREFERENCE CONFIG–R12' | HIGHER LAYER PARAMETER 'SUBFRAMEASSIGNMENT' | SUBFRAME n | | | | | | | | | |
|---|---|---|---|---|---|---|---|---|---|---|---|
| | | 0 | 1 | 2 | 3 | 4 | 5 | 6 | 7 | 8 | 9 |
| 2 | 0 | – | – | 7, 8, 4 | – | – | – | – | 7, 8, 4 | – | – |
| | 1 | – | – | 8, 4 | – | – | – | – | 8, 4 | – | – |
| | 6 | – | – | 6, 8, 4 | – | – | – | – | 8, 6, 4 | – | – |
| 4 | 0 | – | – | 12, 7, 11, 8 | 7, 4, 5, 6 | – | – | – | – | – | – |
| | 1 | – | – | 12, 8, 11 | 7, 5, 6 | – | – | – | – | – | – |
| | 3 | – | – | 12, 8 | 4, 7 | – | – | – | – | – | – |
| | 6 | – | – | 12, 11, 8 | 4, 5, 6 | – | – | – | – | – | – |
| 5 | 0 | – | – | 12, 7, 11, 13, 8, 4, 9, 5 | – | – | – | – | – | – | – |
| | 1 | – | – | 13, 12, 8, 11, 4, 9, 5 | – | – | – | – | – | – | – |
| | 2 | – | – | 13, 12, 9, 11, 5 | – | – | – | – | – | – | – |
| | 3 | – | – | 13, 12, 5, 4, 8, 9 | – | – | – | – | – | – | – |
| | 4 | – | – | 13, 5, 4, 6, 9 | – | – | – | – | – | – | – |
| | 6 | – | – | 13, 12, 11, 6, 8, 4, 9, 5 | – | – | – | – | – | – | – |

HARQ TIMING IN THE EVENT OF TDD UL/DL CONFIG. 3 WITH DL REFERENCE CONFIG. 5

## FIG.6C

EP 3 177 090 A1

FIG.7A

WHEN eIMTA IS USED

FIG.7B

PUSCH-BASED DL TRANSMISSION/
RECEPTION IS CARRIED OUT

EP 3 177 090 A1

FIG.8

CC#1 | D | S | D | D | D | D | D | D | D | D | S | D | D | D | D | D | D | D | D | TDD

CC#0 | U | U | U | U | U | U | U | U | U | U | U | U | U | U | U | U | U | U | U | FDD (UL)

D DL-PUSCH TRANSMISSION

FIG.9

# FIG.10A

| DL-REFERENCE UL/DL CONFIGURATION | SUBFRAME n | | | | | | | | | |
|---|---|---|---|---|---|---|---|---|---|---|
| | 0 | 1 | 2 | 3 | 4 | 5 | 6 | 7 | 8 | 9 |
| 0 | – | – | 6, 5 | 5, 4 | 4 | – | – | 6, 5 | 5, 4 | 4 |
| 1 | – | – | 7, 6 | 6, 5, 4 | – | – | – | 7, 6 | 6, 5, 4 | – |
| 2 | – | – | 8, 7, 6, 5, 4 | – | – | – | – | 8, 7, 6, 5, 4 | – | – |
| 3 | – | – | 11, 10, 9, 8, 7, 6 | 6, 5 | 5, 4 | – | – | – | – | – |
| 4 | – | – | 12, 11, 10, 9, 8, 7 | 7, 6, 5, 4 | – | – | – | – | – | – |
| 5 | – | – | 13, 12, 11, 10, 9, 8, 7, 6, 5, 4 | – | – | – | – | – | – | – |
| 6 | – | – | 8, 7 | 7, 6 | 6, 5 | – | – | 7 | 7, 6, 5 | – |

# FIG.10B

EXAMPLE OF HARQ TIMING IN FDD-SCELL WHEN TDD CELL OF TDD UL/DL CONFIG. 3 IS PCELL

EP 3 177 090 A1

FIG.11

UL FREQUENCY: HARQ TIMING IN THE EVENT OF REFERENCE UL/DL CONFIGURATION 3
DL FREQUENCY: HARQ TIMING WHEN FDD-PCELL IN TDD-FDD CA USES REFERENCE UL/DL CONFIGURATION 3

```
┌─────────────┐      ┌─────────────┐      ┌─────────────┐
│  (E)PDCCH   │ ───► │   DL-PUSCH  │ ───► │    PUCCH    │
└─────────────┘      └─────────────┘      └─────────────┘
```

DOWNLINK CONTROL SIGNAL TO COMMAND DL-PUSCH RECEPTION
AND PUCCH RESOURCE ARE IMPLICITLY ASSOCIATED

FIG.12

## FIG.13A

INDICATE PUSCH RESOURCE EXPLICITLY WITH DOWNLINK CONTROL SIGNAL THAT COMMANDS DL-PUSCH RECEPTION

## FIG.13B

| VALUE OF 'PUCCH RESOURCE INDICATOR' | PUCCH RESOURCE SET |
|---|---|
| '00' | THE 1st PUCCH RESOURCE VALUE CONFIGURED BY THE HIGHER LAYERS |
| '01' | THE 2nd PUCCH RESOURCE VALUE CONFIGURED BY THE HIGHER LAYERS |
| '10' | THE 3rd PUCCH RESOURCE VALUE CONFIGURED BY THE HIGHER LAYERS |
| '11' | THE 4th PUCCH RESOURCE VALUE CONFIGURED BY THE HIGHER LAYERS |

EP 3 177 090 A1

DL-PUSCH AND PUCCH RESOURCE ARE IMPLICITLY ASSOCIATED

DMRS

DMRS

PUCCH

DL-PUSCH

(E)PDCCH

FIG.14

MULTIPLEX HARQ-ACK OF #8

MULTIPLEX HARQ-ACK OF #9

PUSCH-BASED DL
TRANSMISSION/RECEPTION

FIG.15

FIG.16

10

101

101

| COMMUNICATION PATH INTERFACE | BASEBAND SIGNAL PROCESSING SECTION | TRANSMITTING/ RECEIVING SECTION | AMPLIFYING SECTION |
|---|---|---|---|
| 106 | 104 | 103 | 102 |

TO HIGHER STATION APPARATUS 30 OR OTHER RADIO BASE STATION 10

105
CALL PROCESSING SECTION

103
TRANSMITTING/ RECEIVING SECTION

102
AMPLIFYING SECTION

FIG.17

COMMUNICATION PATH
INTERFACE 106

CONTROL
SECTION
301

TRANSMISSION
SIGNAL
GENERATING
SECTION
302

MAPPING
SECTION
303

TRANSMITTING/
RECEIVING
SECTION 103

RECEIVING
PROCESS
SECTION
304

TRANSMITTING/
RECEIVING
SECTION 103

FIG.18

EP 3 177 090 A1

FIG.19

EP 3 177 090 A1

TRANSMITTING/RECEIVING SECTION 203

403 MAPPING SECTION

402 TRANSMISSION SIGNAL GENERATING SECTION

401 CONTROL SECTION

DL CONTROL SIGNAL (UL GRANT)

TRANSMITTING/RECEIVING SECTION 203

404 RECEIVING PROCESS SECTION

405 DECISION SECTION

FIG.20

**INTERNATIONAL SEARCH REPORT**

| International application No. |
| --- |
| PCT/JP2015/068992 |

| A. CLASSIFICATION OF SUBJECT MATTER |
| --- |
| *H04W72/04(2009.01)i, H04W28/04(2009.01)i* |

According to International Patent Classification (IPC) or to both national classification and IPC

| B. FIELDS SEARCHED |
| --- |
| Minimum documentation searched (classification system followed by classification symbols) |
| H04W4/00-99/00 |

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| A | WO 2014/112561 A1 (Sharp Corp.), 24 July 2014 (24.07.2014), paragraphs [0053] to [0055] (Family: none) | 1-10 |
| A | Huawei, HiSilicon, "BS Demodulation performance requirements for eIMTA", 3GPP TSG-RAN WG4 Meeting #70bis R4-141691, 2014.04.09, pp.1-6 | 1-10 |

| ☐ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 September 2015 (10.09.15) | 29 September 2015 (29.09.15) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2014156893 A